(19) Europäisches Patentamt
European Patent Office
Office européen des brevets

(11) **EP 1 136 305 A1**

(12) **DEMANDE DE BREVET EUROPEEN**

(43) Date de publication:
**26.09.2001 Bulletin 2001/39**

(51) Int Cl.⁷: **B60K 31/18**, B60K 31/04,
B60S 1/08, B60R 16/02

(21) Numéro de dépôt: **01400729.8**

(22) Date de dépôt: **21.03.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **22.03.2000 FR 0003647**

(71) Demandeur: **SAGEM S.A.**
**75116 Paris (FR)**

(72) Inventeur: **Da Silveira Loss, Luis Henrique**
**90670-250 Porto Alegre (BR)**

(74) Mandataire: **Bloch, Gérard**
**2, square de l'Avenue du Bois**
**75116 Paris (FR)**

(54) **Dispositif de détection de dépassement de vitesse pour véhicule automobile**

(57) Le dispositif comporte des circuits comparateurs (15, 16) pour comparer la valeur du signal de sortie d'un odomètre (7) à une valeur de consigne écrite en mémoire (14) et des circuits (13) d'écriture de la mémoire (14) agencés pour y écrire la valeur du signal de sortie de l'odomètre (7).

FIGURE UNIQUE

# Description

La présente invention concerne les dispositifs embarqués de détection du dépassement d'une vitesse de consigne assignée à un véhicule automobile.

Le conducteur d'un véhicule équipé d'un tel dispositif peut par exemple sélectionner la vitesse maximale autorisée sur une route et le dispositif l'avertit dès qu'il est en infraction. Le conducteur est ainsi libéré de toute observation de l'afficheur de vitesse, ce qui facilite sa conduite.

Un dispositif classique de détection de dépassement d'une vitesse de consigne comporte un comparateur, de commande d'un buzzer ou d'un voyant avertisseur, relié, d'un côté, à un odomètre mesurant la vitesse du véhicule et, de l'autre côté, à une mémoire contenant la valeur de la vitesse de consigne. Cette vitesse peut être sélectionnée au moyen d'un clavier ou de tout autre moyen de relation homme-machine.

Cependant, le clavier nécessite de réserver une certaine place sur le tableau de bord déjà bien encombré. En outre, pour les véhicules dont le tableau de bord n'a pas été prévu pour recevoir le clavier, il est impossible d'installer un tel dispositif.

La présente invention vise à s'affranchir de cette contrainte de place disponible.

A cet effet, l'invention concerne un dispositif de détection de dépassement de vitesse pour véhicule automobile avec des moyens comparateurs, de commande d'un avertisseur, pour comparer la valeur du signal de sortie d'un odomètre à une valeur de consigne écrite en mémoire et des moyens d'écriture de la mémoire, caractérisé par le fait que les moyens d'écriture sont agencés pour écrire en mémoire la valeur du signal de sortie de l'odomètre sous la commande d'un organe d'actionnement.

De préférence, les moyens d'écriture sont agencés pour alternativement commander une mémorisation d'une vitesse de consigne et commander son effacement lors d'actionnements successifs de l'organe d'actionnement.

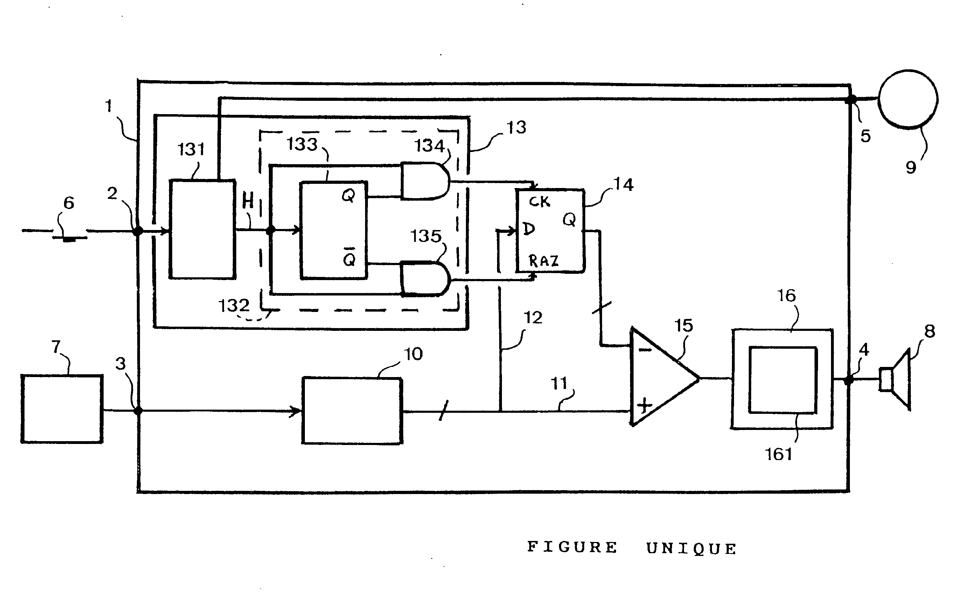

L'invention sera mieux comprise à l'aide de la description suivante d'une forme de réalisation préférée du dispositif de détection selon l'invention, en référence à la figure unique annexée qui en est une représentation schématique.

Le dispositif représenté, portant la référence 1 sur la figure, est monté à bord d'un véhicule automobile pour détecter les dépassements de vitesse par rapport à une vitesse de consigne.

Il comporte un comparateur 15 relié en entrée, d'un côté, par une liaison 11, ici un bus parallèle, à un odomètre 7 et, d'un autre côté, aux sorties Q d'une mémoire 14, ici un registre de bascules D parallèle/parallèle, dans laquelle a été écrite la valeur de consigne. Des circuits d'écriture 13, que le conducteur du véhicule peut activer, commandent une entrée CK de signal d'horloge de la mémoire 14, commandant la mémorisation d'une valeur de vitesse de consigne présentée sur les entrées D.

L'odomètre 7 fournissant des impulsions à une fréquence proportionnelle à la vitesse du véhicule, il est prévu, entre l'entrée 3 de liaison avec l'odomètre 7 et la liaison 11, des circuits convertisseurs 10 ayant une fonction de fréquencemètre. Les circuits convertisseurs 10 fournissent cycliquement, sur la liaison parallèle 11, un octet de valeur représentant la fréquence instantanée et donc la vitesse du véhicule. La liaison 11 comporte une branche 12 aboutissant aux entrées D de valeur de la mémoire 14.

Les circuits d'écriture 13 sont commandés par des circuits de relations homme-machine et précisément ici par un interrupteur 6 à commande manuelle, laissant passer une tension d'activation des circuits d'écriture 13 lorsqu'il est dans son état actif. Dans le cas spécifique de cet exemple, l'interrupteur 6 est un bouton poussoir à rappel automatique qui commande aussi un moteur 9 de lave-glace.

Afin d'effectuer une discrimination entre les deux types de commandes du bouton 6, de mémorisation de vitesse de consigne et d'activation du moteur 9, les circuits d'écriture 13 comportent un circuit 131 de détermination, ou discrimination, de durée de l'activation du bouton 6. Si la tension de commande provenant du bouton 6 représente une impulsion de durée inférieure à un seuil prédéterminé, en mémoire dans le circuit 131, ce dernier active, par une courte impulsion H, l'entrée d'horloge de la mémoire 14, commandant ainsi la mémorisation de la valeur instantanée de vitesse issue du convertisseur 10. Si, au contraire, la tension de commande fournie par le bouton 6 atteint ou dépasse ce seuil, ici de 0,5 s, le circuit 131 applique uniquement une tension d'activation sur une borne 5 reliée au moteur 9. Les circuits amplificateurs de puissance nécessaires à la commande du moteur 9 n'ont pas été représentés.

Les circuits d'écriture 13 comportent en outre, dans cet exemple, un circuit d'aiguillage 132, ou démultiplexeur, monté en série entre la sortie du circuit 131 et l'entrée d'horloge CK de la mémoire 14. Le circuit d'aiguillage 132 comporte un compteur 133 à un étage, diviseur par 2, commandé par les courtes impulsions H issues du circuit 131 et dont les sorties complémentaires Q et $\bar{Q}$ contrôlent, en opposition de phase, deux portes ET respectives 134 et 135 d'aiguillage des impulsions H respectivement vers l'entrée d'horloge CK de la mémoire 14 et vers une entrée de remise à zéro (RAZ) de celle-ci.

Le comparateur 15 change d'état lorsque la valeur instantanée de vitesse sur la liaison 11 dépasse celle de consigne, provenant de la mémoire 14. Ici, la valeur de consigne est appliquée sur l'entrée négative du comparateur 15 et celui-ci signale donc tout résultat de comparaison (calcul de différence) ayant un signe positif.

La sortie du comparateur 15 commande des circuits 16 adaptateurs de signal, reliés à une borne de sortie 4, de liaison avec un avertisseur, ici un buzzer 8. En variante, le buzzer, ou un afficheur d'avertissement, est intégré dans le dispositif 1.

Dans cet exemple, le comparateur 15 est constitué d'un soustracteur qui, outre le signe de la différence entre les signaux d'entrée, fournit aussi la valeur de cette différence, c'est-à-dire la valeur représentant l'excès de vitesse. Les circuits 16 comportent en mémoire une table 161 de correspondance entre la valeur d'excès de vitesse qu'ils reçoivent et la commande à appliquer à la borne 4. Il est ainsi défini un jeu de plusieurs tranches successives de valeurs croissantes d'excès de vitesse auquel est associé un jeu de commandes respectives du buzzer 8. Ces commandes correspondent ici à un jeu de fréquences croissantes d'impulsions d'activation du buzzer 8.

Le fonctionnement du dispositif de détection représenté va maintenant être expliqué plus en détails.

Le conducteur du véhicule équipé du dispositif de détection 1 choisit, dans une phase initiale, une vitesse de consigne, par exemple 90 km/h. Pour ce faire, il fait rouler son véhicule à cette vitesse de consigne et active un court instant, inférieur au seuil de 0,5 s, le bouton 6. Le circuit de discrimination 131 détecte donc la fin de l'activation du bouton 6 moins de 0,5 s après le début de cette activation et commande alors l'entrée d'horloge CK de la mémoire 14, ce qui met en mémoire la valeur instantanée (90 km/h) fournie par l'odomètre 7. Le compteur 133, mis à l'état 1 (Q = 1) à la mise sous tension par un circuit non représenté, a ainsi aiguillé l'impulsion H à travers la porte 134 vers l'entrée d'horloge CK de la mémoire 14. Le compteur 133 change d'état sur le front arrière, descendant, des impulsions H, c'est-à-dire qu'il retombe à l'état 0 après cette première impulsion H et débloque donc l'entrée qu'il contrôle de la porte 135 de remise à zéro; sa sortie reste cependant à l'état 0 à cause de l'état 0 que vient de prendre le signal impulsionnel H. Les circuits d'écriture 13, qui écrivent en mémoire 14 la valeur du signal de sortie de l'odomètre 7, contrôlent en fait, par le signal d'horloge H, des portes d'accès en écriture (entrées D) aux points mémoires depuis la liaison 12. Ces portes des entrées D constituent donc des interrupteurs d'écriture reliant, sur commande du conducteur, le bus 11, 12 à la mémoire 14.

Le dispositif ne nécessite ainsi aucun clavier de sélection de vitesse de consigne, ni même, dans cet exemple, de touche spécifique de mémorisation de celle-ci. Il peut donc être implanté en dehors du tableau de bord.

Ensuite, en phase d'exploitation, le comparateur 15 fournit la suite des valeurs représentant l'excès de vitesse instantané et la valeur instantanée adresse la table 161 des circuits 16 pour sélectionner la fréquence de commande correspondante du buzzer 8. En absence d'excès de vitesse, la valeur instantanée en sortie du comparateur 15 est invalidée par le signe négatif qui y est associé.

En cas de deuxième activation du bouton 6 pendant une durée inférieure au seuil, le circuit 131 fournit une deuxième impulsion H qui est cette fois aiguillée vers l'entrée de remise à zéro RAZ de la mémoire 14, par la porte 135 qui a été débloquée tout en fin du cycle précédent lié à la première activation du bouton 6.

Une troisième activation du bouton 6 dans les conditions ci-dessus permet de mémoriser une autre valeur de vitesse de consigne.

Les circuits 13 commandant la mémorisation de la valeur de vitesse de consigne sont ainsi prévus pour alternativement commander une mémorisation d'une telle valeur et commander son effacement lors d'activations successives de l'interrupteur 6.

Si, par contre, le bouton 6 est activé pendant au moins la durée du seuil de 0,5 s, le circuit 131 active sa sortie reliée à la borne 5 de liaison avec le moteur 9, et ne fournit aucune impulsion H. La commande du moteur 9 par le bouton 6 est simplement retardée, ou amputée, de la valeur de seuil de 0,5 s. Le circuit 131 peut être prévu pour prolonger d'autant la fin du signal appliqué à la borne 5, pour que le conducteur n'ait pas à activer un temps accru le bouton 6 lorsqu'il veut commander le moteur 9.

**Revendications**

1. Dispositif de détection de dépassement de vitesse pour véhicule automobile avec des moyens comparateurs (15, 16), de commande d'un avertisseur (8), pour comparer la valeur du signal de sortie d'un odomètre (7) à une valeur de consigne écrite en mémoire (14) et des moyens (13) d'écriture de la mémoire (14), **caractérisé par** le fait que les moyens d'écriture (13) sont agencés pour écrire en mémoire (14) la valeur du signal de sortie de l'odomètre (7) sous la commande d'un organe d'actionnement (6).

2. Dispositif selon la revendication 1, dans lequel les moyens d'écriture (13) sont agencés pour alternativement commander une mémorisation d'une vitesse de consigne et commander son effacement lors d'actionnements successifs de l'organe d'actionnement (6).

3. Dispositif selon la revendication 2, dans lequel les moyens d'écriture (13) comprennent un circuit d'aiguillage (132) relié à une entrée d'horloge (CK) et une entrée de remise à zéro (RAZ) de la mémoire (14) également reliée à l'odomètre (7) par des portes d'accès en écriture (D).

4. Dispositif selon l'une des revendications 1 à 3, dans lequel l'organe l'organe d'actionnement est un interrupteur (6) de commande d'un organe (9) de véhicule et les moyens d'écriture (13) comportent des moyens (131) de détermination d'une durée d'activation de l'interrupteur (6) agencés pour commander la mémoire (14) si la durée d'activation est inférieure à un seuil et, sinon, pour commander l'organe (9) du véhicule.

5. Dispositif selon l'une des revendications 1 à 4, dans lequel les moyens comparateurs (15, 16) sont agencés pour fournir une valeur de dépassement de la vitesse de consigne et pour commander des moyens avertisseurs (8) en fonction de ladite valeur.

FIGURE UNIQUE

**Office européen des brevets**

## RAPPORT DE RECHERCHE EUROPEENNE

Numéro de la demande

EP 01 40 0729

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | FR 2 755 651 A (BOSCH GMBH ROBERT) 15 mai 1998 (1998-05-15) | 1,5 | B60K31/18 B60K31/04 |
| Y | * page 10, dernier alinéa; revendication 1; figures * | 2,3 | B60S1/08 B60R16/02 |
| Y | DE 197 12 081 A (PLACZKO HELMUT) 24 juillet 1997 (1997-07-24) * revendications 2-5 * | 2 | |
| Y | US 3 891 046 A (OICLES JEFFREY A) 24 juin 1975 (1975-06-24) * revendication 1 * | 3 | |
| X | EP 0 978 407 A (VOLKSWAGENWERK AG) 9 février 2000 (2000-02-09) | 1 | |
| A | * revendication 1 * | 2,5 | |
| A | DE 195 25 138 A (MARQUARDT GMBH) 18 janvier 1996 (1996-01-18) * revendication 8 * | 4 | |
| E | EP 0 999 086 A (BAYERISCHE MOTOREN WERKE AG) 10 mai 2000 (2000-05-10) * le document en entier * | 1 | |

DOMAINES TECHNIQUES RECHERCHES (Int.Cl.7)

B60K
B60S
B60R

Le présent rapport a été établi pour toutes les revendications

| Lieu de la recherche | Date d'achèvement de la recherche | Examinateur |
|---|---|---|
| LA HAYE | 20 juillet 2001 | Bufacchi, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 01 40 0729

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

20-07-2001

| Document brevet cité au rapport de recherche | | Date de publication | Membre(s) de la famille de brevet(s) | | Date de publication |
|---|---|---|---|---|---|
| FR 2755651 | A | 15-05-1998 | DE<br>GB<br>JP<br>US | 19646104 C<br>2319362 A,B<br>10151968 A<br>6125320 A | 02-04-1998<br>20-05-1998<br>09-06-1998<br>26-09-2000 |
| DE 19712081 | A | 24-07-1997 | AUCUN | | |
| US 3891046 | A | 24-06-1975 | DE<br>JP | 2100747 A<br>52003077 B | 22-07-1971<br>26-01-1977 |
| EP 0978407 | A | 09-02-2000 | DE | 19835566 A | 10-02-2000 |
| DE 19525138 | A | 18-01-1996 | AUCUN | | |
| EP 0999086 | A | 10-05-2000 | DE | 19850686 A | 04-05-2000 |

EPO FORM P0460

Pour tout renseignement concernant cette annexe : voir Journal Officiel de l'Office européen des brevets, No.12/82